# EUROPEAN PATENT APPLICATION

(11) **EP 4 718 238 A1**
(43) Date of publication of application: **01.04.2026**
(21) Application number: 25194948.3
(22) Date of filing: 08.08.2025
(51) Int. Cl.: G06F 8/65, G06F 8/656, G06F 9/455

(54) **METHOD AND DEVICE FOR HOT UPGRADING VIRTUAL MACHINE**

(30) Priority: 29.09.2024 CN 202411376852
(71) Applicant: Beijing Volcano Engine Technology Co., Ltd., Beijing 100190 (CN)
(72) Inventor: FENG, Zhimin, Beijing, 100028 (CN)
(74) Representative: Marks & Clerk LLP

(57) **Abstract**

Embodiments of the present disclosure provide a method and device for hot upgrading a virtual machine, including: creating (S201) a QEMU component corresponding to an individual virtual machine on a DPU, where sub-threads in the QEMU component are in a one-to-one correspondence with VCPU threads on a physical machine, and are configured to receive and process an IO request sent by the VCPU thread; creating (S202) a new QEMU component corresponding to a target virtual machine on the DPU in response to a hot upgrade instruction for a target QEMU component corresponding to the target virtual machine; pausing (S203) the target QEMU component on the DPU, saving state information of each sub-thread in the target QEMU component, and synchronizing state information of each sub-thread to the new QEMU component; and receiving and processing (S204), through the new QEMU component, the IO request sent by the VCPU thread.

## Description

### TECHNICAL FIELD

Embodiments of the present disclosure relate to the technical field of virtual machines and, in particular, to a method and a device for hot upgrading a virtual machine.

### BACKGROUND

In a virtualization scenario, a new component version needs to be released for function iteration and defect repair of a virtual machine. In order not to affect the virtual machine in running, a hot upgrade capability is usually leveraged to upgrade components of the virtual machine to the latest version.

In the prior art, the hot upgrade process of the virtual machine is similar to the live migration of the virtual machine, and specifically includes: starting a new virtual machine with a new Kernel-Based Virtual Machine (KVM) component and a new Quick Emulator (QEMU) component, then pausing the running virtual machine, synchronizing a state that needs to be guaranteed by the virtual machine to the new virtual machine, then starting the new virtual machine to run, and at the same time, exiting the old virtual machine, so that the hot upgrade of the QEMU component and the KVM component is realized without restarting the virtual machine. Although the hot upgrade does not require the virtual machine to shut-down and restart, it is also necessary to pause the virtual machine for state saving and restoring operations, and thus there will be a short-term unavailable state for the virtual machine service during the hot upgrade, and this time period is called a downtime of the hot upgrade of the virtual machine.

The inventors found that the prior art has at least the following technical problems: when the virtual machine is hot upgraded by the prior art solutions, the downtime of the virtual machine is relatively long.

### SUMMARY

Embodiments of the present disclosure provide a method and a device for hot upgrading a virtual machine, which may reduce the downtime of the virtual machine during the hot upgrade process.

In a first aspect, an embodiment of the present disclosure provides a method for hot upgrading a virtual machine, including:
creating a quick emulator (QEMU) component corresponding to an individual virtual machine on a data processing unit (DPU), where the QEMU component includes a plurality of sub-threads, each of the sub-thread in the QEMU component is in a one-to-one correspondence with a virtual central processing unit (VCPU) thread on a physical machine, and a sub-thread in the QEMU component is configured to receive and process an input/output (IO) request sent by a corresponding VCPU thread;
creating a new QEMU component corresponding to a target virtual machine on the DPU in response to a hot upgrade instruction for a target QEMU component corresponding to the target virtual machine;
pausing the target QEMU component on the DPU, saving state information of each sub-thread in the target QEMU component, and synchronizing state information of each sub-thread to the new QEMU component; and
receiving and processing, through the new QEMU component, the IO request sent by the VCPU thread.

In a second aspect, an embodiment of the present disclosure provides a device for hot upgrading a virtual machine, including:
a creating unit, configured to create a quick emulator (QEMU) component corresponding to an individual virtual machine on a data processing unit (DPU), where the QEMU component includes a plurality of sub-threads, each of the sub-threads in the QEMU component is in a one-to-one correspondence with a virtual central processing unit (VCPU) threads on a physical machine, and a sub-thread in the QEMU component is configured to receive and process an input/output (IO) request sent by a corresponding VCPU thread;
a hot upgrading unit, configured to create a new QEMU component corresponding to a target virtual machine on the DPU in response to a hot upgrade instruction for a target QEMU component corresponding to the target virtual machine;
a synchronizing unit, configured to pause the target QEMU component on the DPU, save state information of each sub-thread in the target QEMU component, and synchronize the state information of each sub-thread to the new QEMU component; and
a processing unit, configured to receive and process, through the new QEMU component, the IO request sent by the VCPU thread.

In a third aspect, an embodiment of the present disclosure provides an electronic device, including:
a processor, and
a memory; where the memory stores computer-executable instructions; and
the processor executes the computer-executable instructions stored in the memory, to cause the at least one processor to execute the method for hot upgrading a virtual machine of the above first aspect and various possible designs of the first aspect.

In a fourth aspect, an embodiment of the present disclosure provides a computer-readable storage medium, where the computer-readable storage medium stores computer-executable instructions which, when executed by a processor, cause the processor to implement the method for hot upgrading a virtual machine of the above first aspect and various possible designs of the first aspect is implemented.

In a fifth aspect, an embodiment of the present disclosure provides a computer program product, including a computer program which, when executed by a processor, causes the processor to implement the method for hot upgrading a virtual machine of the above first aspect and various possible designs of the first aspect.

The hot upgrade method and device for a virtual machine provided by the embodiment include: creating a quick emulator (QEMU) component corresponding to an individual virtual machine on a data processing unit (DPU), where the QEMU component includes a plurality of sub-threads, each of the sub-threads in the QEMU component is in a one-to-one correspondence with a virtual central processing unit (VCPU) thread on a physical machine, and a sub-thread in the QEMU component is configured to receive and process an input/output (IO) request sent by the corresponding VCPU thread; creating a new QEMU component corresponding to a target virtual machine on the DPU in response to a hot upgrade instruction for a target QEMU component corresponding to the target virtual machine; pausing the target QEMU component on the DPU, saving state information of each sub-thread in the target QEMU component, and synchronizing state information of each sub-thread to the new QEMU component; and receiving and processing, through the new QEMU component, the IO request sent by the VCPU thread. In this technical solution, when the QEMU component is upgraded, only the QEMU being run on the DPU card needs to be paused, without pausing the VCPU thread on the physical machine. In this way, when the QEMU component is upgraded, the VCPU thread of the virtual machine is running normally, zero downtime of the hot upgrade of the QEMU component is achieved, and the downtime of the virtual machine during the hot upgrade process is further reduced.

### BRIEF DESCRIPTION OF THE DRAWINGS

In order to illustrate the technical solutions in the embodiments of the present disclosure or in the prior art more clearly, the following briefly introduces the drawings that need to be used in describing the embodiments or the prior art. Apparently, the drawings in the following description show some embodiments of the present disclosure, and a person of ordinary skill in the art may still derive other drawings from these drawings without creative efforts.
FIG. 1 is a schematic diagram of an application scene of a method for hot upgrading a virtual machine provided by an embodiment of the present disclosure;
FIG. 2 is a first flowchart of a method for hot upgrading a virtual machine provided by an embodiment of the present disclosure;
FIG. 3 is a first schematic diagram of a method for hot upgrading a virtual machine provided by an embodiment of the present disclosure;
FIG. 4 is a second flowchart of a method for hot upgrading a virtual machine provided by an embodiment of the present disclosure;
FIG. 5 is a second schematic diagram of a method for hot upgrading a virtual machine provided by an embodiment of the present disclosure;
FIG. 6 is a schematic structural diagram of a device for hot upgrading a virtual machine provided by an embodiment of the present disclosure; and
FIG. 7 is a schematic structural diagram of an electronic device provided by an embodiment of the present disclosure.

### DETAILED DESCRIPTION OF EMBODIMENTS

In order to make the objectives, technical solutions and advantages of the embodiments of the present disclosure clearer, the technical solutions in the embodiments of the present disclosure will be described clearly and comprehensively below with reference to the drawings in the embodiments of the present disclosure. Obviously, the described embodiments are part of the embodiments of the present disclosure, but not all of them. Based on the embodiments in the present disclosure, all other embodiments obtained by those of ordinary skill in the art without creative efforts fall within the protection scope of the present disclosure.

In order to make the objectives, technical solutions and advantages of the embodiments of the present disclosure clearer, the technical solutions in the embodiments of the present disclosure will be described clearly and comprehensively below with reference to the drawings in the embodiments of the present disclosure. Obviously, the described embodiments are part of the embodiments of the present disclosure, but not all of them. Based on the embodiments in the present disclosure, all other embodiments obtained by those of ordinary skill in the art without creative efforts fall within the protection scope of the present disclosure.

In a virtualization scenario, a new component version needs to be released for function iteration and defect repair of a virtual machine. In order not to affect the running virtual machine, a hot upgrade capability is usually leveraged to upgrade components of the virtual machine to the latest version. In some embodiments, the virtualized data plane components include a QEMU component and a KVM component. The QEMU component is a user-mode program, while the KVM component is a kernel module. One virtual machine corresponds to one QEMU component, and the QEMU component includes a plurality of sub-threads, and each virtual central processing unit (VCPU) in the virtual machine corresponds to one sub-thread in the QEMU component.

In the prior art, the hot upgrade process of the virtual machine is similar to the live migration of the virtual machine, and specifically includes: starting a new virtual machine with a new KVM and a new QEMU, then pausing the running virtual machine, synchronizing a state that needs to be guaranteed by the virtual machine to the new virtual machine, then starting the new virtual machine to run, and at the same time, exiting the old virtual machine, so that the hot upgrade of the QEMU and KVM components is realized without restarting the virtual machine. Although the hot upgrade does not require the virtual machine to shut-down and restart, it is also necessary to pause the virtual machine for state saving and restoring operations, and thus there will be a short-term unavailable state for the virtual machine service during the hot upgrade, and this time period is called a downtime of the hot upgrade of the virtual machine. It may be understood that the less the downtime of the virtual machine during the hot upgrade, the less impact on the service performance jitter of the customer virtual machine.

The inventors found that the prior art has at least the following technical problems: when the virtual machine is hot upgraded by the prior art solutions, the downtime of the virtual machine is relatively long.

It may be seen that how to reduce the downtime of the virtual machine during the hot upgrade of the virtual machine, so as to improve the performance of the user virtual machine is a technical problem that needs to be solved urgently at present.

In view of the technical problems in the prior art, the inventors' technical concept is as follows: first, creating a quick emulator (QEMU) component corresponding to an individual virtual machine on a data processing unit (DPU), where the QEMU component includes a plurality of sub-threads, each of the sub-threads in the QEMU component is in a one-to-one correspondence with a virtual central processing unit (VCPU) thread on a physical machine, and a sub-thread in the QEMU component is configured to receive and process an input/output (IO) request sent by its corresponding VCPU thread. Secondly, creating a new QEMU component corresponding to a target virtual machine on the DPU in response to a hot upgrade instruction for a target QEMU component corresponding to the target virtual machine. Finally, pausing the target QEMU component on the DPU, saving state information of each sub-thread in the target QEMU component, and synchronizing state information of each sub-thread to the new QEMU component; and receiving and processing, through the new QEMU component, the IO request sent by the VCPU thread.

In this technical solution, when the QEMU component is upgraded, only the QEMU component being run on the DPU card needs to be paused, without pausing the VCPU thread on the physical machine. In this way, when the QEMU component is upgraded, the VCPU thread of the virtual machine is running normally, zero downtime of the hot upgrade of the QEMU component is achieved, and the downtime of the virtual machine during the hot upgrade process is further reduced.

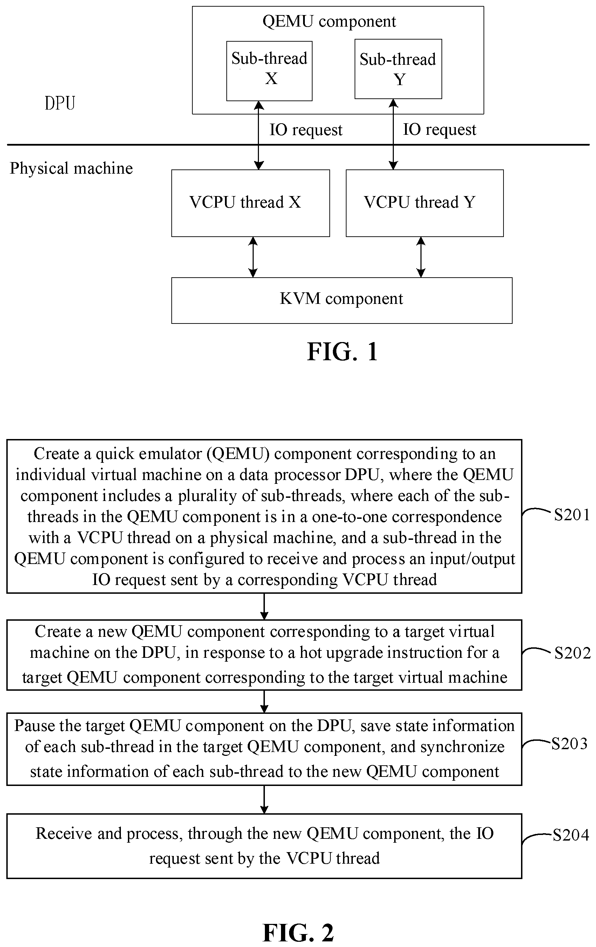

The application scene of the embodiments of the present disclosure is explained below:
The hot upgrade method for a virtual machine provided by the embodiments of the present disclosure may be applied to a DPU scene. FIG. 1 is a schematic diagram of an application scene of a method for hot upgrading a virtual machine provided by an embodiment of the present disclosure. As shown in FIG. 1, using the DPU architecture, the QEMU component in the virtualization component is unloaded to the DPU card to run, while the KVM component is still run on the physical machine. In this way, based on the DPU architecture, the independent hot upgrade capabilities of the QEMU component and the KVM component may be realized. The QEMU component includes sub-thread X and sub-thread Y. Thread X corresponds to the VCPU thread X deployed by the virtual machine on the physical machine; and thread Y corresponds to the VCPU thread Y deployed by the virtual machine on the physical machine. The sub-thread X in the QEMU component is configured to receive and process the IO request sent by the corresponding VCPU thread X. The sub-thread Y in the QEMU component is configured to receive and process the IO request sent by the corresponding VCPU thread Y.

When the virtual machine needs to be hot upgraded, the method for hot upgrading a virtual machine provided by the embodiments of the present disclosure may be used to perform hot upgrade on the QEMU component and the KVM component.

The following is a specific implementation process of the hot upgrade method and device for a virtual machine according to the embodiments of the present disclosure. Some examples are only for illustration, and are not intended to limit the present disclosure. The execution body of the method for hot upgrading a virtual machine according to the embodiments of the present disclosure is an electronic device, which may be a terminal, a server, or the like.

FIG. 2 is a first flowchart of a method for hot upgrading a virtual machine provided by an embodiment of the present disclosure. As shown in FIG. 2, the method for hot upgrading a virtual machine may include:
At S201, a quick emulator (QEMU) component corresponding to an individual virtual machine is created on a data processing unit (DPU), where the QEMU component includes a plurality of sub-threads, each of the sub-threads in the QEMU component is in a one-to-one correspondence with a virtual central processing unit (VCPU) thread on a physical machine, and a sub-thread in the QEMU component is configured to receive and process an input/output (IO) request sent by a corresponding VCPU thread.

In the embodiment of the present disclosure, since the QEMU component is run on the DPU card, while the KVM component is deployed on the physical machine, there will also be a VCPU thread on the physical machine to execute the KVM code under the DPU architecture, and the VCPU thread on the physical machine is in a one-to-one correspondence with the sub-thread in the QEMU component.

It should be noted that, only when the virtual machine has an IO request that needs to be processed with the intervention of the QEMU component, the VCPU thread on the physical machine will send the IO request to the corresponding sub-thread on the DPU for processing. In some embodiments, there will be a large number of IO requests that need to be processed by the QEMU component at startup; during the normal running process of the virtual machine, there is no IO request exiting to the QEMU component.

Exemplarily, the QEMU component corresponding to the virtual machine includes sub-thread X and sub-thread Y. The VCPU threads on the physical machine include VCPU thread X and VCPU thread Y. The sub-thread X is in a one-to-one correspondence with the VCPU thread X, and the sub-thread Y is in a one-to-one correspondence with the VCPU thread Y.

At S202, a new QEMU component corresponding to a target virtual machine is created on the DPU in response to a hot upgrade instruction for a target QEMU component corresponding to the target virtual machine.

In the embodiment of the present disclosure, the plurality of sub-threads included in the new QEMU component created on the DPU are the same as the plurality of sub-threads included in the target QEMU component.

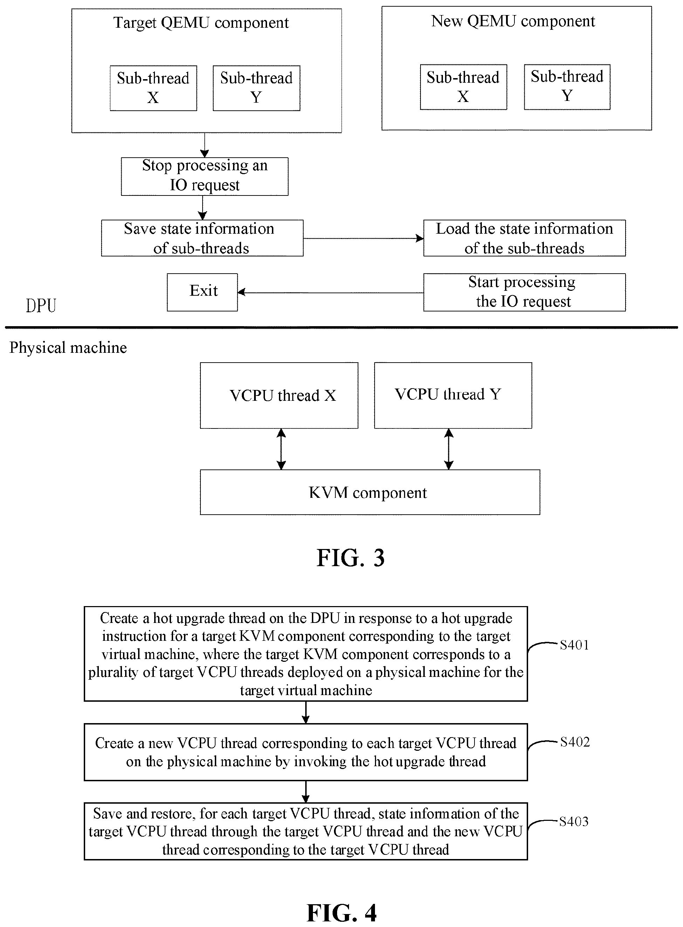

Exemplarily, as shown in FIG. 3, the target QEMU component corresponding to the target virtual machine includes sub-thread X and sub-thread Y. The new QEMU component includes sub-thread X and sub-thread Y.

At S203, the target QEMU component on the DPU is paused, state information of each sub-thread in the target QEMU component is saved, and state information of each sub-thread is synchronized to the new QEMU component.

In the embodiment of the present disclosure, during the hot upgrade process of the QEMU component, it is first necessary to pause the processing of the IO request from the VCPU thread on the physical machine. Then, the device state of the old QEMU component (that is, the target QEMU component) is saved and sent to the new QEMU component. After loading the device state, the new QEMU component starts to receive the IO request submitted by the VCPU thread on the physical machine. The device state of the old QEMU component includes state information of each sub-thread.

In some embodiments, pausing the target QEMU component on the DPU means stopping processing the IO request.

Exemplarily, as shown in FIG. 3, the target QEMU component corresponding to the target virtual machine includes sub-thread X and sub-thread Y. Correspondingly, pausing the target QEMU component on the DPU includes: pausing sub-thread X to process the IO request, and stopping sub-thread Y to process the IO request.

Optionally, the process of synchronizing state information of each sub-thread to the new QEMU component is the process of loading the state information of each sub-thread into the new QEMU component.

It should be noted that, when pausing the target QEMU component on the DPU, there is no need to pause the VCPU thread on the physical machine. That is, when the QEMU component is upgraded, the VCPU thread of the virtual machine is run normally.

In some embodiments, the target QEMU component includes a plurality of target sub-threads; the target sub-thread corresponds to one target VCPU thread on the physical machine; and the method further includes: continuing to run the target VCPU thread on the physical machine in response to the hot upgrade instruction for the target QEMU component corresponding to the target virtual machine.

At S204, the IO request sent by the VCPU thread is received and processed through the new QEMU component

In some embodiments, as shown in FIG. 3, this step includes: receiving and processing, through sub-thread X in the new QEMU component, the IO request sent by VCPU thread X, and receiving and processing, through sub-thread Y in the new QEMU component, the IO request sent by VCPU thread Y.

In some embodiments, as shown in FIG. 3, after receiving and processing, through the new QEMU component, the IO request sent by the VCPU thread, the method further includes: shutting down the target QEMU component on the DPU.

An embodiment of the present disclosure provides a method for hot upgrading a virtual machine: first, creating a quick emulator (QEMU) component corresponding to an individual virtual machine on a data processing unit (DPU), where the QEMU component includes a plurality of sub-threads, each of the sub-threads in the QEMU component is in a one-to-one correspondence with a virtual central processing unit (VCPU) thread on a physical machine, and a sub-thread in the QEMU component is configured to receive and process an input/output (IO) request sent by a corresponding VCPU thread. Secondly, creating a new QEMU component corresponding to a target virtual machine on the DPU in response to a hot upgrade instruction for a target QEMU component corresponding to the target virtual machine; finally, pausing the target QEMU component on the DPU, saving state information of each sub-thread in the target QEMU component, and synchronizing state information of each sub-thread to the new QEMU component; and receiving and processing, through the new QEMU component, the IO request sent by the VCPU thread. In this technical solution, when the QEMU component is upgraded, only the QEMU component being run on the DPU card needs to be paused, without pausing the VCPU thread on the physical machine. In this way, when the QEMU component is upgraded, the VCPU thread of the virtual machine is running normally, zero downtime of the hot upgrade of the QEMU component is achieved, and the downtime of the virtual machine during the hot upgrade process is further reduced.

In the embodiment of the present disclosure, the virtual machine corresponds to a KVM component deployed on the physical machine, and the plurality of VCPU threads deployed by the virtual machine on the physical machine process the service request through the KVM component. In this case, by reconstructing the virtualized VCPU architecture, the independent hot upgrade of the virtualized components (the QEMU component and the KVM component) is realized, and on this basis, the influence of the hot upgrade of the QEMU component on the performance of the virtual machine is eliminated.

In some embodiments, the downtime of the hot upgrade of the KVM component is optimized, and the state of the VCPU may be saved and restored in parallel to reduce the downtime. Correspondingly, as shown in FIG. 4, the method further includes:
at S401, a hot upgrade thread is created on the DPU in response to a hot upgrade instruction for a target KVM component corresponding to the target virtual machine, where the target KVM component corresponds to a plurality of target VCPU threads deployed by the target virtual machine on the physical machine.

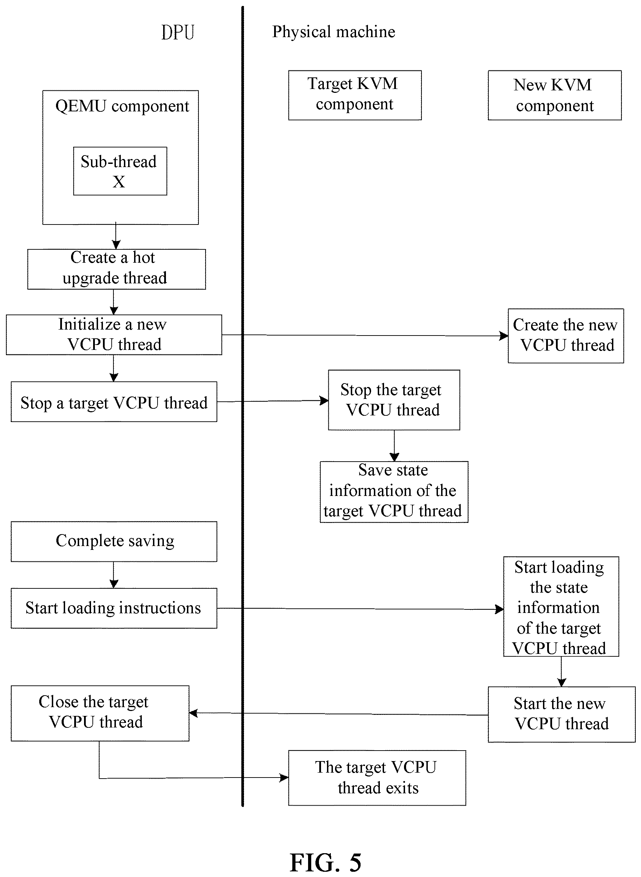

In this step, as shown in FIG. 5, the created hot upgrade thread is only responsible for controlling the upgrade process, and the saving and restoring of the virtual machine state are both completed by the old and new VCPU threads respectively. Compared with the conventional hot upgrade solution (all processes are completed by the upgrade thread serially), the new hot upgrade solution has obvious optimization on the downtime. The virtual machine state includes state information of each VCPU thread.

At S402, a new VCPU thread corresponding to each target VCPU thread is created on the physical machine by invoking the hot upgrade thread.

In this step, as shown in FIG. 5, the new VCPU thread may be initialized by the hot upgrade thread, thereby creating the new VCPU thread corresponding to each target VCPU thread. The initialization of the new VCPU thread may send a creating instruction of the new VCPU thread to the physical machine, and the physical machine receives the creating instruction and creates the new VCPU thread. It may be understood that the created new VCPU thread is in a one-to-one correspondence with the target VCPU thread.

Optionally, as shown in FIG. 5, before saving and restoring, for each target VCPU thread, the state information of the target VCPU thread through the target VCPU thread and the new VCPU thread corresponding to the target VCPU thread, the method further includes: pausing the plurality of target VCPU threads deployed by the target virtual machine on the physical machine by invoking the hot upgrade thread. In this way, the state information of the target VCPU thread may be saved through the target VCPU thread.

At S403, for each target VCPU thread, state information of the target VCPU thread is saved and restored through the target VCPU thread and the new VCPU thread corresponding to the target VCPU thread.

In some embodiments, the state information of the VCPU thread may be saved through the target VCPU thread (the old VCPU thread), the state information of the VCPU thread may be loaded through the created new VCPU thread, and the state information of the target VCPU thread is saved and restored through the upgrade of the old and new VCPU threads. Correspondingly, this step may include: saving, for each target VCPU thread, the state information of the target VCPU thread through the target VCPU thread; and synchronizing the state information of the target VCPU thread to the new VCPU thread corresponding to the target VCPU thread.

Optionally, as shown in FIG. 5, the step of synchronizing the state information of the target VCPU thread to the new VCPU thread corresponding to the target VCPU thread may include: if the saving of the state information of the target VCPU thread by the target VCPU thread is completed, feeding back saving completion information to the hot upgrade thread; and sending an information loading instruction to the new VCPU thread corresponding to the target VCPU thread through the hot upgrade thread, and loading the state information of the target VCPU thread through the new VCPU thread.

It should be noted that the hot upgrade thread may send the information loading instruction to the new VCPU threads corresponding to a plurality of target VCPU threads. At this time, the loading of the state information of the target VCPU thread by the plurality of new VCPU threads may be processed in parallel, that is, the state of the VCPU is saved and restored in parallel, reducing the downtime.

Optionally, as shown in FIG. 5, after saving and restoring, for each target VCPU thread, the state information of the target VCPU thread through the target VCPU thread and the new VCPU thread corresponding to the target VCPU thread, the method further includes: processing a service request of the target virtual machine through the new VCPU thread corresponding to each target VCPU thread; and shutting down the plurality of target VCPU threads deployed by the target virtual machine on the physical machine.

In the embodiment of the present disclosure, the hot upgrade data of the VCPU thread is saved and restored by means of the VCPU thread, the concurrency of data saving and restoring is improved, the impact on the performance of the virtual machine when the large-scale virtual machine performs hot upgrade on the KVM component is reduced, and the user experience is improved.

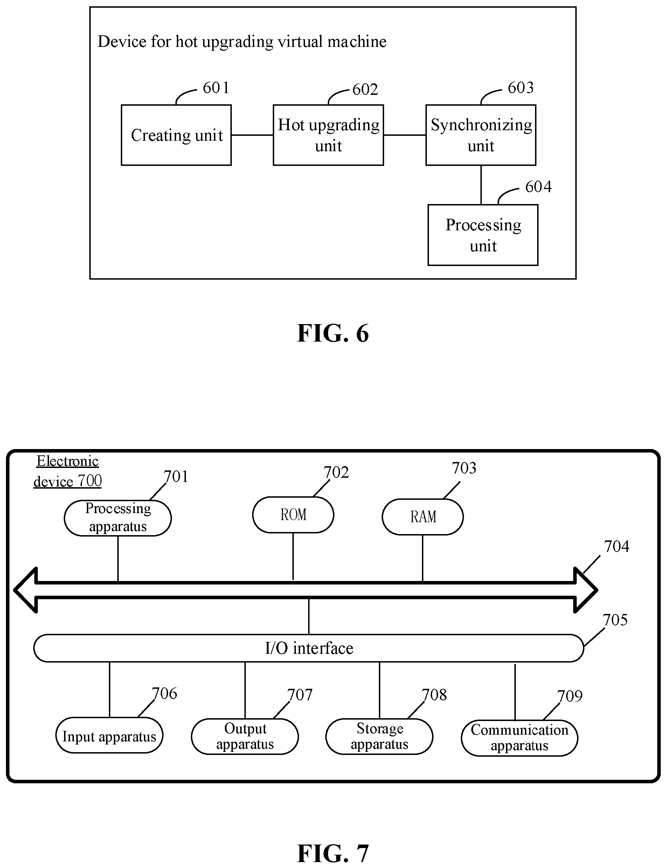

FIG. 6 is a schematic structural diagram of a device for hot upgrading a virtual machine provided by an embodiment of the present disclosure. As shown in FIG. 6, the device for hot upgrading a virtual machine includes:
a creating unit 601, configured to create a quick emulator (QEMU) component corresponding to an individual virtual machine on a data processing unit (DPU), where the QEMU component includes a plurality of sub-threads, each of the sub-threads in the QEMU component is in a one-to-one correspondence with a virtual central processing unit (VCPU) thread on a physical machine, and a sub-thread in the QEMU component is configured to receive and process an input/output (IO) request sent by its corresponding VCPU thread;
a hot upgrading unit 602, configured to create a new QEMU component corresponding to a target virtual machine on the DPU in response to a hot upgrade instruction for a target QEMU component corresponding to the target virtual machine;
a synchronizing unit 603, configured to pause the target QEMU component on the DPU, save state information of each sub-thread in the target QEMU component, and synchronize the state information of each sub-thread to the new QEMU component; and
a processing unit 604, configured to receive and process, through the new QEMU component, the IO request sent by the VCPU thread.

According to one or more embodiments of the present disclosure, the target QEMU component includes a plurality of target sub-threads; the target sub-thread corresponds to one target VCPU thread on the physical machine; and the hot upgrading unit 602 is further configured to continue to run the target VCPU thread on the physical machine in response to the hot upgrade instruction for the target QEMU component corresponding to the target virtual machine.

According to one or more embodiments of the present disclosure, the synchronizing unit 603 is further configured to shut down the target QEMU component on the DPU.

According to one or more embodiments of the present disclosure, the virtual machine corresponds to a KVM component deployed on the physical machine, and the plurality of VCPU threads deployed by the virtual machine on the physical machine process the service request through the KVM component; and device further includes: a saving unit, where the saving unit is configured to create a hot upgrade thread on the DPU in response to a hot upgrade instruction for a target KVM component corresponding to the target virtual machine, where the target KVM component corresponds to a plurality of target VCPU threads deployed by the target virtual machine on the physical machine; create a new VCPU thread corresponding to each target VCPU thread on the physical machine by invoking the hot upgrade thread; and save and restore, for each target VCPU thread, state information of the target VCPU thread through the target VCPU thread and the new VCPU thread corresponding to the target VCPU thread.

According to one or more embodiments of the present disclosure, the saving unit, which saves and restores, for each target VCPU thread, the state information of the target VCPU thread through the target VCPU thread and the new VCPU thread corresponding to the target VCPU thread, includes: saving, for each target VCPU thread, the state information of the target VCPU thread through the target VCPU thread; and synchronizing the state information of the target VCPU thread to the new VCPU thread corresponding to the target VCPU thread.

According to one or more embodiments of the present disclosure, the saving unit, which synchronizes the state information of the target VCPU thread to the new VCPU thread corresponding to the target VCPU thread, includes: feeding back saving completion information to the hot upgrade thread if the saving of the state information of the target VCPU thread by the target VCPU thread is completed; and sending an information loading instruction to the new VCPU thread corresponding to the target VCPU thread through the hot upgrade thread, and loading the state information of the target VCPU thread through the new VCPU thread.

According to one or more embodiments of the present disclosure, the saving unit is further configured to pause the plurality of target VCPU threads deployed by the target virtual machine on the physical machine by invoking the hot upgrade thread.

According to one or more embodiments of the present disclosure, the processing unit 604 is further configured to process a service request of the target virtual machine through the new VCPU thread corresponding to each target VCPU thread; and shut down the plurality of target VCPU threads deployed by the target virtual machine on the physical machine.

Referring to FIG. 7, it shows a schematic structural diagram of an electronic device 700 suitable for implementing the embodiments of the present disclosure, and the electronic device 700 may be a terminal device or a server. The terminal device may include, but is not limited to, mobile terminals such as mobile phones, notebook computers, digital broadcast receivers, personal digital assistants (abbreviated as PDA), tablet computers, portable media players (abbreviated as PMP), vehicle-mounted terminals (such as vehicle-mounted navigation terminals), etc., and fixed terminals such as digital TV, desktop computers, etc. The electronic device shown in FIG. 7 is only an example, and should not impose any restrictions on the function and scope of use of the embodiments of the present disclosure.

As shown in FIG. 7, the electronic device 700 may include a processing apparatus (such as a central processing unit, a graphics processor, etc.) 701, which may execute various appropriate actions and processes according to a program stored in a read-only memory (abbreviated as ROM) 702 or a program loaded from a storage apparatus 708 into a random-access memory (abbreviated as RAM) 703. The RAM 703 also stores various programs and data required for the operation of the electronic device 700. The processing apparatus 701, the ROM 702, and the RAM 703 are connected to each other through a bus 704. An input/output (I/O) interface 705 is also connected to the bus 704.

Generally, the following apparatus may be connected to the I/O interface 705: an input apparatus 706 including, for example, a touchscreen, a touchpad, a keyboard, a mouse, a camera, a microphone, an accelerometer, a gyroscope, etc.; an output apparatus 707 including, for example, a liquid crystal display (abbreviated as LCD), a speaker, a vibrator, etc.; a storage apparatus 708 including, for example, a magnetic tape, a hard disk, etc.; and a communication apparatus 709. The communication apparatus 709 may allow the electronic device 700 to perform wireless or wired communication with other devices to exchange data. Although FIG. 7 shows the electronic device 700 having various apparatuses, it should be understood that it is not required to implement or provide all of the shown apparatuses. Alternatively, more or fewer apparatuses may be implemented or provided.

In particular, according to the embodiments of the present disclosure, the processes described above with reference to the flowcharts may be implemented as a computer software program. For example, an embodiment of the present disclosure includes a computer program product, which includes a computer program carried on a computer-readable medium, and the computer program contains program codes for executing the method shown in the flowchart. In such an embodiment, the computer program may be downloaded and installed from a network through the communication apparatus 709, or installed from the storage apparatus 708, or installed from the ROM 702. When the computer program is executed by the processing apparatus 701, the above functions defined in the methods of the embodiments of the present disclosure are executed.

It should be noted that the above computer-readable medium in the present disclosure may be a computer-readable signal medium or a computer-readable storage medium or any combination thereof. The computer-readable storage medium may be, for example, but not limited to, an electrical, magnetic, optical, electromagnetic, infrared, or semiconductor system, apparatus or device, or any combination thereof. More specific examples of the computer-readable storage medium may include, but are not limited to: an electrical connection with one or more wires, a portable computer magnetic disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination thereof. In the present disclosure, a computer-readable storage medium may be any tangible medium containing or storing a program that may be used by or in combination with an instruction execution system, apparatus or device. In the present disclosure, a computer-readable signal medium may include a data signal propagated in baseband or as part of a carrier wave, and computer-readable program codes are carried in the data signal. The data signal propagated in this manner may take a variety of forms, including but not limited to an electromagnetic signal, an optical signal, or any suitable combination thereof. The computer-readable signal medium may also be any computer-readable medium other than the computer-readable storage medium. The computer-readable signal medium may send, propagate, or transmit a program used by or in combination with an instruction execution system, apparatus or device. The program codes contained in the computer-readable medium may be transmitted by any suitable medium, including but not limited to an electric wire, an optical cable, a radio frequency (RF), or any suitable combination thereof.

The above computer-readable medium may be included in the above electronic device, or may exist alone without being assembled into the electronic device.

The above computer-readable medium carries one or more programs, and when the above one or more programs are executed by the electronic device, the electronic device is caused to execute the method shown in the above embodiments.

The computer program codes for executing the operations of the present disclosure may be written in one or more programming languages or a combination thereof. The above programming languages include object-oriented programming languages such as Java, Smalltalk, C++, and also include conventional procedural programming languages such as "C" language or similar programming languages. The program codes may be executed entirely on a user computer, partly on a user computer, as an independent software package, partly on a user computer and partly on a remote computer, or entirely on a remote computer or a server. In the case involving the remote computer, the remote computer may be connected to the user computer through any kind of network, including a local area network (abbreviated as LAN) or a wide area network (abbreviated as WAN), or may be connected to an external computer (for example, through the Internet using an Internet service provider).

The flowcharts and block diagrams in the drawings illustrate the architecture, functions and operations of possible implementations of the systems, methods and computer program products according to various embodiments of the present disclosure. In this regard, each block in the flowcharts or block diagrams may represent a module, a program segment or a part of codes, and the module, the program segment or the part of codes contains one or more executable instructions for implementing specified logical functions. It should also be noted that, in some alternative implementations, the functions marked in the blocks may also occur in a different order from those marked in the drawings. For example, two blocks shown in succession may actually be executed substantially in parallel, or they may sometimes be executed in a reverse order, which depends on the functions involved. It should also be noted that each block in the block diagrams and/or flowcharts and the combination of blocks in the block diagrams and/or flowcharts may be implemented by a dedicated hardware-based system that executes specified functions or operations, or may be implemented by a combination of dedicated hardware and computer instructions.

The units involved in the embodiments of the present disclosure may be implemented by means of software or hardware. The name of a unit does not constitute a limitation of the unit itself under certain circumstances. For example, a first acquisition unit may also be described as "a unit that acquires at least two Internet Protocol addresses".

The functions described herein above may be performed, at least partially, by one or more hardware logic components. For example, without limitation, exemplary types of hardware logic components that may be used include: a field programmable gate array (FPGA), an application specific integrated circuit (ASIC), an application specific standard product (ASSP), a system on a chip (SOC), a complex programmable logical device (CPLD), etc.

In a first aspect, according to one or more embodiments of the present disclosure, a method for hot upgrading a virtual machine is provided, including:
creating a quick emulator (QEMU) component corresponding to an individual virtual machine on a data processing unit (DPU), where the QEMU component includes a plurality of sub-threads, each of the sub-threads in the QEMU component is in a one-to-one correspondence with a virtual central processing unit (VCPU) thread on a physical machine, and a sub-thread in the QEMU component is configured to receive and process an input/output (IO) request sent by its corresponding VCPU thread;
creating a new QEMU component corresponding to a target virtual machine on the DPU in response to a hot upgrade instruction for a target QEMU component corresponding to the target virtual machine;
pausing the target QEMU component on the DPU, saving state information of each sub-thread in the target QEMU component, and synchronizing state information of each sub-thread to the new QEMU component; and
receiving and processing, through the new QEMU component, the IO request sent by the VCPU thread.

According to one or more embodiments of the present disclosure, the target QEMU component includes a plurality of target sub-threads; the target sub-thread corresponds to one target VCPU thread on the physical machine; and the method further includes: continuing to run the target VCPU thread on the physical machine in response to the hot upgrade instruction for the target QEMU component corresponding to the target virtual machine.

According to one or more embodiments of the present disclosure, after receiving and processing, through the new QEMU component, the IO request sent by the VCPU thread, the method further includes: shutting down the target QEMU component on the DPU.

According to one or more embodiments of the present disclosure, the virtual machine corresponds to a KVM component deployed on the physical machine, and the plurality of VCPU threads deployed by the virtual machine on the physical machine process the service request through the KVM component; and the method further includes: creating a hot upgrade thread on the DPU in response to a hot upgrade instruction for a target KVM component corresponding to the target virtual machine, where the target KVM component corresponds to a plurality of target VCPU threads deployed by the target virtual machine on the physical machine; creating a new VCPU thread corresponding to each target VCPU thread on the physical machine by invoking the hot upgrade thread; and saving and restoring, for each target VCPU thread, state information of the target VCPU thread through the target VCPU thread and the new VCPU thread corresponding to the target VCPU thread.

According to one or more embodiments of the present disclosure, the saving and restoring, for each target VCPU thread, the state information of the target VCPU thread through the target VCPU thread and the new VCPU thread corresponding to the target VCPU thread, includes: saving, for each target VCPU thread, the state information of the target VCPU thread through the target VCPU thread; and synchronizing the state information of the target VCPU thread to the new VCPU thread corresponding to the target VCPU thread.

According to one or more embodiments of the present disclosure, the synchronizing the state information of the target VCPU thread to the new VCPU thread corresponding to the target VCPU thread includes: feeding back saving completion information to the hot upgrade thread in response to the saving of the state information of the target VCPU thread by the target VCPU thread being completed; and sending an information loading instruction to the new VCPU thread corresponding to the target VCPU thread through the hot upgrade thread, and loading the state information of the target VCPU thread through the new VCPU thread.

According to one or more embodiments of the present disclosure, before saving and restoring, for each target VCPU thread, the state information of the target VCPU thread through the target VCPU thread and the new VCPU thread corresponding to the target VCPU thread, the method further includes: pausing the plurality of target VCPU threads deployed by the target virtual machine on the physical machine by invoking the hot upgrade thread.

According to one or more embodiments of the present disclosure, after saving and restoring, for each target VCPU thread, the state information of the target VCPU thread through the target VCPU thread and the new VCPU thread corresponding to the target VCPU thread, the method further includes: processing a service request of the target virtual machine through the new VCPU thread corresponding to each target VCPU thread; and shutting down the plurality of target VCPU threads deployed by the target virtual machine on the physical machine.

In a second aspect, according to one or more embodiments of the present disclosure, a device for hot upgrading a virtual machine is provided, including:
a creating unit, configured to create a quick emulator (QEMU) component corresponding to an individual virtual machine on a data processing unit (DPU), where the QEMU component includes a plurality of sub-threads, each of the sub-threads in the QEMU component is in a one-to-one correspondence with a virtual central processing unit (VCPU) thread on a physical machine, and a sub-thread in the QEMU component is configured to receive and process an input/output (IO) request sent by a corresponding VCPU thread;
a hot upgrading unit, configured to create a new QEMU component corresponding to a target virtual machine on the DPU in response to a hot upgrade instruction for a target QEMU component corresponding to the target virtual machine;
a synchronizing unit, configured to pause the target QEMU component on the DPU, save state information of each sub-thread in the target QEMU component, and synchronize the state information of each sub-thread to the new QEMU component; and
a processing unit, configured to receive and process, through the new QEMU component, the IO request sent by the VCPU thread.

According to one or more embodiments of the present disclosure, the target QEMU component includes a plurality of target sub-threads; the target sub-thread corresponds to one target VCPU thread on the physical machine; and the hot upgrading unit is further configured to continue to run the target VCPU thread on the physical machine in response to the hot upgrade instruction for the target QEMU component corresponding to the target virtual machine.

According to one or more embodiments of the present disclosure, the synchronizing unit is further configured to shut down the target QEMU component on the DPU.

According to one or more embodiments of the present disclosure, the virtual machine corresponds to a KVM component deployed on the physical machine, and the plurality of VCPU threads deployed by the virtual machine on the physical machine process the service request through the KVM component; and the device further includes: a saving unit, where the saving unit is configured to create a hot upgrade thread on the DPU in response to a hot upgrade instruction for a target KVM component corresponding to the target virtual machine, where the target KVM component corresponds to a plurality of target VCPU threads deployed by the target virtual machine on the physical machine; create a new VCPU thread corresponding to each target VCPU thread on the physical machine by invoking the hot upgrade thread; and save and restore, for each target VCPU thread, state information of the target VCPU thread through the target VCPU thread and the new VCPU thread corresponding to the target VCPU thread.

According to one or more embodiments of the present disclosure, the saving unit, which saves and restores, for each target VCPU thread, the state information of the target VCPU thread through the target VCPU thread and the new VCPU thread corresponding to the target VCPU thread, includes: saving, for each target VCPU thread, the state information of the target VCPU thread through the target VCPU thread; and synchronizing the state information of the target VCPU thread to the new VCPU thread corresponding to the target VCPU thread.

According to one or more embodiments of the present disclosure, the saving unit, which synchronizes the state information of the target VCPU thread to the new VCPU thread corresponding to the target VCPU thread, includes: feeding back saving completion information to the hot upgrade thread in response to the saving of the state information of the target VCPU thread by the target VCPU thread being completed; and sending an information loading instruction to the new VCPU thread corresponding to the target VCPU thread through the hot upgrade thread, and loading the state information of the target VCPU thread through the new VCPU thread.

According to one or more embodiments of the present disclosure, the saving unit is further configured to pause the plurality of target VCPU threads deployed by the target virtual machine on the physical machine by invoking the hot upgrade thread.

According to one or more embodiments of the present disclosure, the processing unit is further configured to process a service request of the target virtual machine through the new VCPU thread corresponding to each target VCPU thread; and shut down the plurality of target VCPU threads deployed by the target virtual machine on the physical machine.

In a third aspect, according to one or more embodiments of the present disclosure, an electronic device is provided, including:
at least one processor, and
a memory, where the memory stores computer-executable instructions; and
the at least one processor executes the computer-executable instructions stored in the memory, to enable the at least one processor to execute the method for hot upgrading a virtual machine of the above first aspect and various possible designs of the first aspect.

In a fourth aspect, according to one or more embodiments of the present disclosure, a computer-readable storage medium is provided, where the computer-readable storage medium stores computer-executable instructions which, when executed by a processor, cause the processor to implement the method for hot upgrading a virtual machine according to the above first aspect and various possible designs of the first aspect.

In a fifth aspect, according to one or more embodiments of the present disclosure, a computer program product is provided, including a computer program which, when executed by a processor, causes the processor to implement the method for hot upgrading a virtual machine according to the above first aspect and various possible designs of the first aspect is implemented.

The above description is merely preferred embodiments of the present disclosure and an illustration of the applied technical principles. Those skilled in the art should understand that the scope of disclosure involved in the present disclosure is not limited to the technical solutions formed by the specific combination of the above technical features, and should also cover other technical solutions formed by any combination of the above technical features or equivalent features thereof without departing from the above disclosed concept, for example, the technical solutions formed by replacing the above features with the technical features with similar functions disclosed in the present disclosure (but not limited to).

In addition, although operations are depicted in a specific order, it should not be understood that these operations are required to be performed in the specific order shown or in a sequential order. Under certain circumstances, multitasking and parallel processing may be advantageous. Similarly, although several specific implementation details are included in the above discussion, these should not be interpreted as limiting the scope of the present disclosure. Certain features that are described in the context of separate embodiments may also be implemented in combination in a single embodiment. Conversely, various features that are described in the context of a single embodiment may also be implemented in a plurality of embodiments individually or in any suitable sub-combination.

Although the subject matter has been described in language specific to structural features and/or logical actions of the method, it should be understood that the subject matter defined in the appended claims is not necessarily limited to the specific features or actions described above. Conversely, the specific features and actions described above are merely exemplary forms for implementing the claims.

## Claims

1. A method for hot upgrading a virtual machine, comprising:
creating (S201) a quick emulator, QEMU, component corresponding to an individual virtual machine on a data processing unit, DPU,, wherein the QEMU component comprises a plurality of sub-threads, each of the sub-threads in the QEMU component is in a one-to-one correspondence with a virtual central processing unit, VCPU, thread on a physical machine, and a sub-thread in the QEMU component is configured to receive and process an input/output, IO, request sent by a corresponding VCPU thread;
creating (S202) a new QEMU component corresponding to a target virtual machine on the DPU in response to a hot upgrade instruction for a target QEMU component corresponding to the target virtual machine;
pausing (S203) the target QEMU component on the DPU, saving state information of each sub-thread in the target QEMU component, and synchronizing state information of each sub-thread to the new QEMU component; and
receiving and processing (S204), through the new QEMU component, the IO request sent by the VCPU thread.

2. The method of claim 1, wherein the target QEMU component comprises a plurality of target sub-threads; each of the target sub-threads corresponds to one target VCPU thread on the physical machine; and the method further comprises:
continuing to run the target VCPU thread on the physical machine in response to the hot upgrade instruction for the target QEMU component corresponding to the target virtual machine.

3. The method of claim 1, wherein after receiving and processing, through the new QEMU component, the IO request sent by the VCPU thread, the method further comprises:
shutting down the target QEMU component on the DPU.

4. The method of claim 1, wherein a kernel-based virtual machine, KVM, component corresponding to the virtual machine is deployed on the physical machine, and the plurality of VCPU threads deployed by the virtual machine on the physical machine process a service request through the KVM component; and the method further comprises:
creating (S401) a hot upgrade thread on the DPU in response to a hot upgrade instruction for a target KVM component corresponding to the target virtual machine, wherein the target KVM component corresponds to a plurality of target VCPU threads deployed by the target virtual machine on the physical machine;
creating (S402) a new VCPU thread corresponding to each target VCPU thread on the physical machine by invoking the hot upgrade thread; and
saving and restoring (S403), for each target VCPU thread, state information of the target VCPU thread through the target VCPU thread and the new VCPU thread corresponding to the target VCPU thread.

5. The method of claim 4, wherein saving and restoring, for each target VCPU thread, the state information of the target VCPU thread through the target VCPU thread and the new VCPU thread corresponding to the target VCPU thread comprises:
saving, for each target VCPU thread, the state information of the target VCPU thread through the target VCPU thread; and
synchronizing the state information of the target VCPU thread to the new VCPU thread corresponding to the target VCPU thread.

6. The method of claim 5, wherein synchronizing the state information of the target VCPU thread to the new VCPU thread corresponding to the target VCPU thread comprises:
feeding back saving completion information to the hot upgrade thread in response to the saving of the state information of the target VCPU thread by the target VCPU thread being completed; and
sending an information loading instruction to the new VCPU thread corresponding to the target VCPU thread through the hot upgrade thread, and loading the state information of the target VCPU thread through the new VCPU thread.

7. The method of claim 4, wherein before saving and restoring, for each target VCPU thread, the state information of the target VCPU thread through the target VCPU thread and the new VCPU thread corresponding to the target VCPU thread, the method further comprises:
pausing the plurality of target VCPU threads deployed by the target virtual machine on the physical machine by invoking the hot upgrade thread.

8. The method of claim 4, wherein after saving and restoring, for each target VCPU thread, the state information of the target VCPU thread through the target VCPU thread and the new VCPU thread corresponding to the target VCPU thread, the method further comprises:
processing a service request of the target virtual machine through the new VCPU thread corresponding to each target VCPU thread; and
shutting down the plurality of target VCPU threads deployed by the target virtual machine on the physical machine.

9. A device for hot upgrading a virtual machine, comprising:
a creating unit (601), configured to create a quick emulator, QEMU, component corresponding to an individual virtual machine on a data processing unit, DPU, wherein the QEMU component comprises a plurality of sub-threads, each of the sub-threads in the QEMU component is in a one-to-one correspondence with a virtual central processing unit, VCPU, thread on a physical machine, and a sub-thread in the QEMU component is configured to receive and process an input/output, IO, request sent by a corresponding VCPU thread;
a hot upgrading unit (602), configured to create a new QEMU component corresponding to a target virtual machine on the DPU in response to a hot upgrade instruction for a target QEMU component corresponding to the target virtual machine;
a synchronizing unit (603), configured to pause the target QEMU component on the DPU, save state information of each sub-thread in the target QEMU component, and synchronize the state information of each sub-thread to the new QEMU component; and
a processing unit (604), configured to receive and process, through the new QEMU component, the IO request sent by the VCPU thread.

10. An electronic device, comprising:
a processor; and
a memory, wherein the memory stores computer-executable instructions; and
the processor executes the computer-executable instructions stored in the memory, to cause the processor to execute the method for hot upgrading a virtual machine of any of claims 1 to 8.

11. A computer-readable storage medium, storing computer-executable instructions which, when executed by a processor, cause the processor to implement the hot upgrade method for a virtual machine of any of claims 1 to 8.

12. A computer program product, comprising a computer program which, when executed by a processor, causes the processor to implement the method for hot upgrading a virtual machine of any of claims 1 to 8.
